# EUROPÄISCHE PATENTSCHRIFT

(11) **EP 3 678 964 B1**
(45) Veröffentlichungstag und Bekanntmachung des Hinweises auf die Patenterteilung: **11.12.2024**
(21) Anmeldenummer: 18765094.0
(22) Anmeldetag: 03.09.2018
(51) Int. Cl.: B65G 47/244

(54) **VORRICHTUNG UND VERFAHREN ZUR AUSRICHTUNG VON GEBINDEN**
DEVICE AND METHOD FOR ORIENTING PACKAGES
DISPOSITIF ET PROCÉDÉ D'ORIENTATION DE LOTS DE PRODUITS

(30) Priorität: 08.09.2017 DE 102017120730
(43) Veröffentlichungstag der Anmeldung: 15.07.2020
(73) Patentinhaber: KHS GmbH, 44143 Dortmund (DE)
(72) Erfinder: STUHLMANN, Christopher, 34497 Korbach (DE); PAU, Norman, 47533 Kleve (DE); WESS, Lothar, 47533Kleve (DE); BERG, Manfred, 46446 Emmerich (DE); LOOK, Johannes, 47533 Kleve (DE)
(86) Internationale Anmeldenummer: PCT/EP2018/073591
(87) Internationale Veröffentlichungsnummer: WO 2019/048368

(56) Entgegenhaltungen:
- EP-A1- 0 458 580
- EP-A1- 1 205 410
- EP-A2- 1 180 484
- WO-A1-2004/039706
- GB-A- 2 144 698
- US-B2- 7 097 029

## Beschreibung

Die Erfindung betrifft ein Verfahren und eine Vorrichtung zum Drehen von Gebinden in einer Behälterbehandlungsanlage.

In Behälterbehandlungsanlagen werden Behälter oder auch zu Gebinden zusammengestellte Behälter zwischen den einzelnen Arbeitsstationen der Behälterbehandlungsanlagen auf Transportvorrichtungen bewegt. Dabei ist es je nach Arbeitsstation notwendig, die Gebinde zu drehen, um sie in eine vorgegebene Position und Ausrichtung zur Transportvorrichtung zu bewegen.

Eine entsprechende Vorrichtung ist beispielsweise aus der DE 101 45 543 A1 bekannt, bei der zu Gebinden zusammengestellte Behältergruppen über ein Leitsystem auf eine Drehstation mit einer Vielzahl von Förderbändern transportiert werden. Die Gebinde werden dabei jeweils auf zwei Förderbänder aufgesetzt, die mit unterschiedlicher Geschwindigkeit bewegt werden, sodass eine Drehbewegung des Gebindes entsteht. Nach Durchführung der Drehbewegung werden die gedrehten Gebinde auf einen weiteren Transporttisch übertragen und dort beispielsweise zur Bildung von Lagen oder auch zur Bündelung an eine Zentriereinheit bewegt. Zu Fehlern kommt es bei der Bildung von Lagen aus den Gebinden beispielsweise dann, wenn die Drehstation das Gebinde nicht in ihre Sollposition bewegt hat und die Gebinde bei der Bündelung gegeneinander verkeilen. Dies kann beispielsweise geschehen, wenn die Drehstation eine zu große oder zu kleine Drehbewegung der Gebinde durchführt.

Die Druckschrift GB 2 144 698 A offenbart ein Verfahren zum Ausrichten von Postsendungen mittels einer Fördereinrichtung.

Die Druckschrift EP 0 458 580 A1 offenbart eine Vorrichtung zur Drehung von länglichen Süßwaren um 90° in mehreren Schritten.

Schließlich offenbart die US 7,097,029 B2 eine Vorrichtung zur Ausrichtung von Stückgütern, umfassend eine Transportvorrichtung, welche aus einem Rollenförderband mit frei drehbaren Rollen besteht, wobei jede Rolle in zwei, unabhängig voneinander antreibbare Rollenabschnitte geteilt ist. Zur Steuerung der Ausrichtung der Stückgüter ist jedem Rollenabschnitt eine Manipulationseinheit zugeordnet, mit welcher entweder die Drehgeschwindigkeit oder die Drehrichtung des jeweiligen Rollenabschnitts gesteuert werden kann. Ferner ist entlang des Transportbereichs, in dem die Ausrichtung des jeweiligen Stückgutes erfolgt, dem sog. Ausrichtbereich, eine Erfassungseinrichtung vorgesehen, welche die Drehbewegung des jeweiligen Stückgutes kontinuierlich überwacht. Beispielsweise kann die Ausrichtung der Stückgüter mittels eines Art Lichtvorhangs erfasst werden, indem auf einer ersten Seite der Transportvorrichtung parallel zur Transportrichtung Lichtleisten angebracht sind, während auf der gegenüberliegenden Seite der Transportvorrichtung korrespondierende Lichtempfänger, angeordnet sind. Auch wenn das Stückgut durch die Drehbewegung im Ausrichtbereich in eine Soll-Position gebracht wird, so ist es nicht vorgesehen, die Ausrichtung des Stückguts in der Soll-Position auf deren genau Position bzw. Ausrichtung oder Drehlage zu prüfen. Eine hohe Positioniergenauigkeit der Stückgüter kann daher nicht erreicht werden.

Der Erfindung liegt somit die Aufgabe zugrunde, ein Verfahren und eine Vorrichtung zum Drehen von Gebinden in einer Behälterbehandlungsanlage bereitzustellen, mit der eine besonders exakte Ausrichtung der Gebinde in eine Sollposition ermöglicht wird.

Die Erfindung löst die Aufgabe durch ein Verfahren zum Drehen von Gebinden mit den Merkmalen des Anspruchs 1 und durch eine Vorrichtung mit den Merkmalen des Anspruchs 7. Vorteilhafte Weiterbildungen der Erfindung sind in den abhängigen Ansprüchen angegeben. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung. Ebenfalls werden die Patentansprüche zu einem Teil der Beschreibung gemacht.

Das erfindungsgemäße Verfahren zum Drehen von Gebinden in einer Behälterbehandlungsanlage umfasst die Schritte: Transport mindestens eines Gebindes, bevorzugt gleichzeitiger Transport mehrerer Gebinde auf einer Transportvorrichtung, Durchführen einer ersten Drehbewegung des mindestens einen Gebindes oder der Gebinde mittels eines Doppelförderers der Transportvorrichtung, Erfassen einer Istausrichtung eines ersten Gebindes mittels einer Überwachungsvorrichtung, Vergleich der Istausrichtung des ersten Gebindes mit einer vorgegebenen Sollausrichtung und Ermittlung einer Abweichung der Istausrichtung von der Sollausrichtung, Ansteuerung der Transportvorrichtung und Durchführen einer die Abweichung ausgleichenden zweiten Drehbewegung des ersten Gebindes.

Das erfindungsgemäße Verfahren ermöglicht eine besonders präzise Positionierung des Gebindes, sodass nachfolgende Vorrichtungen, die mit dem Gebinde arbeiten, das Gebinde in einer besonders exakt vorgegebenen Position übernehmen können.

Unter gleichzeitig wird verstanden, dass mehrere Gebinde zur gleichen Zeit von der Transportvorrichtung, insbesondere vom Doppelförderer transportiert werden. Der Transport der Gebinde erfolgt zudem insbesondere kontinuierlich in eine Transportrichtung, d.h., die Gebinde werden nur in eine Transportrichtung bewegt und können dabei gedreht werden. Ein Transport in eine der Transportrichtung bspw. entgegengesetzte Richtung erfolgt vorzugsweise nicht, wobei ggf. eine Bewegungspause in Transportrichtung auftreten kann.

Unter den Gebinden sind insbesondere Gruppen von Behältern zu verstehen, wobei die Behälter miteinander verbunden sind. Dabei kann die Verbindung der Behälter beispielsweise über eine Klebeverbindung erfolgt sein und/oder die Behälter werden beispielsweise von einer Folie, einem Reifen oder Ähnlichem zusammengehalten. Auch können die Behälter in einer Sammelvorrichtung, wie einem Kasten oder einem Tray, zusammengefasst sein. Bei den zu den Gebinden zusammengefassten Behältern handelt es sich insbesondere um Behälter aus der Lebensmittelindustrie, wie beispielsweise Getränkebehälter. Dies können beispielsweise Flaschen oder Dosen, insbesondere Kunststoffflaschen oder Glasflaschen sein.

Unter der ersten Drehbewegung kann eine Basisdrehung des Gebindes verstanden werden, die das Gebinde zumindest in Richtung der Sollausrichtung dreht. Die erste Drehung wird durch die eingestellte Geschwindigkeitsdifferenz der mindestens zwei zum Doppelförderer gehörenden Fördereinheiten erzeugt.

Die Drehbewegung des Gebindes erfolgt um eine in Vertikalrichtung ausgerichtete Längsachse des Gebindes. Die Längsachse steht somit senkrecht auf der Oberfläche des Doppelförderers. Üblicherweise werden die Gebinde stehend, d. h., die Behälter zeigen mit ihrem Boden zur Oberfläche des Doppelförderers, transportiert. Demnach erfolgt die Drehung des Gebindes insbesondere um eine Längsachse, die parallel zur Längsachse der Behälter des Gebindes ausgerichtet ist.

Auf dem Doppelförderer können gleichzeitig mehrere Gebinde transportiert und gedreht werden. Der Doppelförderer kann dabei beispielsweise bei sämtlichen auf ihm transportierten Gebinden die erste Drehbewegung erzeugen.

Unter dem ersten Gebinde wird eines der von dem Doppelförderer gleichzeitig transportierten Gebinde verstanden. D. h., die Überwachungsvorrichtung erfasst insbesondere immer ein einzelnes Gebinde. Dementsprechend werden auch der Vergleich der Ausrichtung, die Ermittlung einer Abweichung und die Ansteuerung der Transportvorrichtung anhand der Daten dieses einen einzelnen Gebindes durchgeführt.

Als Transportvorrichtung in einer Behälterbehandlungsanlage können insbesondere Fördereinheiten wie beispielsweise Transportbänder, Transportketten Rollentransporteure o. ä. eingesetzt werden. Dabei umfasst ein Doppelförderer mindestens zwei Fördereinheiten, die nebeneinander angeordnet sind und zumindest mit unterschiedlicher Geschwindigkeit betrieben werden können, um die Drehbewegung der Gebinde zu erzeugen. Die von dem Doppelförderer transportierten Gebinde werden somit in Transportrichtung des Doppelförderers bewegt und gleichzeitig aufgrund der Geschwindigkeitsdifferenz zwischen den beiden Fördereinheiten gedreht (erste Drehbewegung). Um eine gleichmäßige Drehbewegung bei allen Gebinden zu erzeugen, wird das Gebinde insbesondere mittig auf die beiden Fördereinheiten aufgesetzt, d. h., das Gebinde steht vorzugsweise mit gleichem Flächenanteil auf beiden Fördereinheiten. Zudem wird es vorzugsweise in einer ausgerichteten Position, beispielsweise aus einer Zentriereinheit kommend, auf den Doppelförderer geleitet.

Unter der Überwachungsvorrichtung wird insbesondere ein optisches System zum Erfassen eines Gebindes verstanden. Dies kann vorzugsweise ein kamerabasiertes System sein, dass beim Erfassen bspw. ein Bild des Gebindes und gegebenenfalls von Teilen der Transportvorrichtung erstellt.

Aus den jeweiligen Daten der Überwachungsvorrichtung, beispielsweise dem erstellten Bild, wird die Ausrichtung des Gebindes auf der Transportvorrichtung, insbesondere auf dem Doppelförderer bestimmt. Dabei wird unter der Ausrichtung insbesondere der Drehwinkel des Gebindes verstanden, d. h., es wird bspw. bestimmt, welchen Drehwinkel das Gebinde aufweist. Somit können unter der Istausrichtung und der Sollausrichtung insbesondere ein Istdrehwinkel und ein Solldrehwinkel verstanden werden.

Als Bezugspunkt hierfür kann beispielsweise die Ausrichtung beim Einlauf des Gebindes auf dem Doppelförderer oder auch beispielsweise die Seitenkante des Doppelförderers genutzt werden. Die so ermittelte Istausrichtung wird beim Vergleich mit einer vorgegebenen Sollausrichtung verglichen und die Abweichung bestimmt. Auch könnte ein Direktvergleich mit einer vorgegebenen Sollausrichtung durchgeführt werden, sodass nicht die absolute Drehbewegung oder die absolute Position auf dem Doppelförderer bestimmt wird, sondern nur die reine Abweichung der Istausrichtung von der Sollausrichtung. Dementsprechend kann die Abweichung der Differenz der beiden Drehwinkel entsprechen, nämlich bspw. der Differenz zwischen dem Istdrehwinkel und dem Solldrehwinkel des Gebindes.

Die Ansteuerung erfolgt beispielsweise mittels einer Steuereinheit, der Informationen zu mindestens der Abweichung, gegebenenfalls auch der Istausrichtung und Sollausrichtung zur Verfügung gestellt werden. Die Ansteuerung erfolgt derart, dass beispielsweise eine Steuereinheit die Geschwindigkeitsdifferenz von zwei nebeneinander angeordneten und das Gebinde gleichzeitig transportierenden Fördereinheiten verändert. Hierdurch kann die zweite Drehbewegung der Gebinde erzeugt werden. Über die Veränderung der Geschwindigkeitsdifferenz kann beispielsweise die Drehrichtung und/oder die Drehgeschwindigkeit der Gebinde um die vertikale Längsachse verändert werden, um so eine weitere bzw. verbesserte Angleichung an die Sollausrichtung zu erreichen. Die zweite Drehbewegung könnte der ersten Drehbewegung in ihrer Geschwindigkeit und ihrem Drehwinkel auch entsprechen.

Die notwendigen Vorrichtungen zum Vergleich, zur Ermittlung und zur Ansteuerung können beispielsweise Teil der Überwachungsvorrichtung sein oder auch als jeweils separate oder in kleineren Einheiten gruppierte Vorrichtungen ausgebildet sein.

Die erste Drehbewegung wird immer von dem Doppelförderer erzeugt und betrifft gleichzeitig alle auf dem Doppelförderer transportierten Gebinde. Nach einer Weiterbildung der Erfindung ist vorgesehen, dass die zweite Drehbewegung zum Ausgleich der Abweichung der Istausrichtung von der Sollausrichtung ebenfalls mittels des Doppelförderers erzeugt wird, d. h., der Doppelförderer wird zur Erzeugung der zweiten Drehbewegung angesteuert. Dabei wird insbesondere das Gebinde von der Überwachungsvorrichtung erfasst, dass als Nächstes von dem Doppelförderer auf ein weiteres Bauteil der Transportvorrichtung oder aber an eine weitere Komponente der Behälterbehandlungsanlage überführt wird. D. h., die erste Drehbewegung des Doppelförderers wird unterbrochen und eine zweite Drehbewegung, die an die IstAusrichtung des einen erfassten Gebindes angepasst ist, wird vom Doppelförderer durchgeführt. Dabei folgen selbstverständlich alle weiteren gleichzeitig vom Doppelförderer beförderten Gebinde der zweiten Drehbewegung.

Sobald das erfasste Gebinde den Doppelförderer verlassen hat, wird entweder wieder die normale Geschwindigkeitsdifferenz zwischen den beiden Fördereinheiten des Doppelförderers bspw. automatisch eingestellt, bis das nächste Gebinde von der Überwachungseinheit überwacht wird oder es wird direkt eine Geschwindigkeitsdifferenz der Fördereinheiten eingestellt, die abhängig von dem nächstfolgenden Gebinde ist, welches mittlerweile von der Überwachungsvorrichtung erfasst und dessen Abweichung bestimmt wurde. Hierdurch können extrem kompakte Anlagen mit hohen Behälterdurchsätzen bereitgestellt werden.

Nach einer Weiterbildung der Erfindung ist vorgesehen, dass die zweite Drehbewegung zum Ausgleich der Abweichung der Istausrichtung von der Sollausrichtung mittels eines Korrekturförderers erzeugt wird. Hierdurch kann insbesondere der Behälterdurchsatz deutlich erhöht werden, da der Doppelförderer mit konstanter Geschwindigkeitsdifferenz gefahren werden kann, nämlich die die erste Drehbewegung erzeugende Geschwindigkeitsdifferenz und keine Umstellung der Geschwindigkeitsdifferenz aufgrund der erfassten Istausrichtung durchgeführt werden muss.

Unter dem Korrekturförderer kann ein dem Doppelförderer entsprechender Förderer, mit zwei nebeneinander angeordneten Fördereinheiten, die mit unterschiedlicher Geschwindigkeit betrieben werden können, verstanden werden. Ein wesentlicher Unterschied zwischen dem Korrekturförderer und dem Doppelförderer ist die Baulänge, da der Doppelförderer insbesondere zum gleichzeitigen Transport einer Vielzahl von Gebinden vorgesehen ist während der Korrekturförderer insbesondere immer nur ein einzelnes Gebinde transportiert und dabei dreht (zweite Drehbewegung).

Um den Behälterdurchsatz weiter zu erhöhen, ist vorzugsweise zwischen dem Doppelförderer und dem Korrekturförderer ein Zwischenförderer angeordnet. Der Zwischenförderer ist vorzugsweise als Einzelförderer ausgebildet, weist somit nur eine einzelne Fördereinheit auf und dient beispielsweise als Behälterpuffer. Der Zwischenförderer ist vorzugsweise nicht als Drehvorrichtung ausgebildet.

Nach einer Weiterbildung der Erfindung ist vorgesehen, dass das Erfassen der Istausrichtung während des Transportes auf dem Doppelförderer, auf einem Korrekturförderer und/oder einem zwischen dem Doppelförderer und dem Korrekturförderer angeordnetem Zwischenförderer erfolgt. Üblicherweise ist es aber ausreichend, eine Überwachungsvorrichtung in einer der o.g. bevorzugten Positionen anzuordnen. Selbstverständlich können jedoch auch mehrere Überwachungsvorrichtungen angeordnet werden, um beispielsweise zusätzliche Kontrollen der Istausrichtung durchzuführen.

Über das Erfassen der Istausrichtung während des Transportes auf dem Doppelförderer ist es in vorteilhafter Weise möglich, noch mittels des Doppelförderers die zweite Drehbewegung des Gebindes durchzuführen. Hierdurch können besonders kompakte Anlagen bereitgestellt werden und es kann gegebenenfalls auf einen möglichen Zwischenförderer oder einen Korrekturförderer verzichtet werden.

Die Erfassung der Istausrichtung auf dem Korrekturförderer ermöglicht eine Erhöhung der Durchsatzgeschwindigkeiten der Gebinde, da der Doppelförderer durchgängig mit derselben Geschwindigkeitsdifferenz fahren kann und keine Veränderung der Geschwindigkeitsdifferenz durchgeführt werden muss.

Insbesondere um den Gebindedurchsatz durch die Vorrichtung weiter zu erhöhen, kann die Erfassung auch durchgeführt werden, während das Gebinde auf einem Zwischenförderer, welcher zwischen dem Doppelförderer und dem Korrekturförderer angeordnet ist, transportiert wird. Hierdurch wird zum einen eine Erfassung auf dem Korrekturförderer nicht mehr notwendig, wodurch der Korrekturförderer direkt die zweite Drehbewegung durchführen kann. Zum anderen kann der Korrekturförderer in seiner Baulänge deutlich kürzer ausgestaltet werden.

Die Vorrichtung kann demnach entsprechend der drei bevorzugten Positionen für die Überwachungsvorrichtung ausgestaltet werden. Bei einer Anordnung der Überwachungsvorrichtung am Doppelförderer kann gegebenenfalls auf einen Zwischenförderer und/oder einen Korrekturförderer verzichtet werden. Bei der Anordnung der Überwachungsvorrichtung am Korrekturförderer weist die Vorrichtung insbesondere keinen Zwischenförderer auf, sondern der Korrekturförderer und der Doppelförderer sind direkt aneinandergrenzend angeordnet. Bei der Anordnung der Überwachungsvorrichtung am Zwischenförderer weist die Vorrichtung den Doppelförderer, den Zwischenförderer und den Korrekturförderer auf.

Nach einer Weiterbildung der Erfindung wird eine automatische Ausrichtungskorrektur durchgeführt, bei der die Abweichungen der Istausrichtung von der Sollausrichtung der einzelnen Gebinde über einen vorgegebenen Zeitraum erfasst und analysiert werden, und bei der, bei Auftreten einer systematischen Abweichung, die erste Drehbewegung der Gebinde automatisch, insbesondere ohne manuellen Eingriff durch Bedienpersonal, anpasst wird.

Unter einer systematischen Abweichung werden sich zumindest ähnelnde Abweichungen oder Abweichungstendenzen verstanden, die sich bei den einzelnen Gebinden wiederholen. D. h., dass über einen vorgegebenen Zeitraum X bei allen Gebinden oder einer bestimmten Prozentzahl von Gebinden immer wieder die gleiche oder eine sehr ähnliche Abweichung auftritt. Dabei kann es sich beispielsweise um einen Drehwinkel und/oder eine Drehwinkelausrichtung handeln, die wiederholt auftritt. Derartige sich wiederholende Abweichungen können durch negative Störgrößen wie beispielsweise fortschreitenden Ketten- oder Bandverschleiß oder sich ändernde Verhältnisse bei der Bandschmierung auftreten. Auch können diese beispielsweise gebindespezifisch sein.

Sobald eine, entsprechend einer vorgegebenen Definition, systematische Abweichung auftritt, wird automatisch und ohne manuellen Eingriff durch Bedienpersonal, die automatische Ausrichtungskorrektur durchgeführt und die Geschwindigkeitsdifferenz zwischen den Führungseinheiten des Doppelförderers wird an die systematische Abweichung angepasst. Die Anpassung erfolgt dabei derart, dass die systematische Abweichung entweder vollständig ausgeglichen wird oder zumindest nur noch in einem verringerten Maß auftritt.

Nach einer Weiterbildung der Erfindung wird zur Ermittlung der systematischen Abweichung eine Istausrichtung der Gebinde mittels mindestens eines Überwachungssystems erfasst und bei der Analyse zum systematischen Fehler berücksichtigt.

Das Überwachungssystem ist insbesondere am Doppelförderer und in Transportrichtung vor der ersten Überwachungsvorrichtung angeordnet. Insbesondere kann das Überwachungssystem im Einlaufbereich des Doppelförderers angeordnet sein, sodass es die Ausrichtung jedes Gebindes beim Einlauf auf den Doppelförderer ermittelt. Das Überwachungssystem kann beispielsweise dazu genutzt werden, bei der Analyse auf einen systematischen Fehler den absoluten Drehwinkel der Gebinde, d. h. bspw. den Drehwinkel zwischen der Erfassung des Überwachungssystems und der Überwachungsvorrichtung zu bestimmen. Hierdurch kann bspw. ermittelt werden, ob eine systematische Abweichung aufgrund der Differenzgeschwindigkeit der beiden Fördereinheiten des Doppelförderers oder beispielsweise einer Bandschmierung der Fördereinheiten auftritt oder ob beispielsweise im Bereich des Einlaufes des Gebindes auf den Doppelförderer ein Fehler vorliegt.

Weiter wird die der Erfindung zugrunde liegende Aufgabe gelöst durch eine Vorrichtung zum Drehen von Gebinden in einer Behälterbehandlungsanlage, mit einer Transportvorrichtung, die einen Doppelförderer umfasst, der zum gleichzeitigen Transport und zum Durchführen einer ersten Drehbewegung der Gebinde ausgebildet ist, eine Überwachungsvorrichtung zur Erfassung einer Istausrichtung von mindestens einem der Gebinde, einer Auswerteinheit, die dazu ausgebildet ist, die Istausrichtung des erfassten Gebindes mit einer Sollausrichtung zu vergleichen und eine Abweichung zu ermitteln, einer Steuereinheit, die dazu ausgebildet ist, die Transportvorrichtung anzusteuern und eine die Abweichung von der Sollausrichtung ausgleichende zweite Drehbewegung des Gebindes zu veranlassen.

Die erfindungsgemäße Vorrichtung ermöglicht die Positioniergenauigkeit der Gebinde bei gleichbleibendem Gebindedurchsatz durch die Vorrichtung deutlich zu erhöhen. Dies wird insbesondere durch die Erfassung des Gebindes durch die Überwachungseinheit, den IST-SOLL-Abgleich und der darauf beruhenden zweiten Drehbewegung des Gebindes bewirkt.

Dabei kann die zweite Drehbewegung des Gebindes beispielsweise durch den Doppelförderer erzeugt werden. Besonders bevorzugt umfasst die Transportvorrichtung jedoch einen Korrekturförderer, der zum Durchführen der zweiten Drehbewegung des Gebindes ausgebildet ist. Der Korrekturförderer entspricht im strukturellen Aufbau bspw. dem Doppelförderer und weist ebenfalls zwei nebeneinander angeordnete Fördereinheiten auf, die mit einer Differenzgeschwindigkeit gefahren werden können. Er ist jedoch in seiner Baulänge deutlich kürzer ausgebildet als der Doppelförderer, da auf ihm insbesondere immer nur ein einzelnes Gebinde gleichzeitig transportiert und gedreht wird, während auf dem Doppelförderer vorzugsweise eine Mehrzahl von Gebinden gleichzeitig transportiert und gedreht werden.

Um die Durchsatzgeschwindigkeit der Gebinde durch die Vorrichtung weiter zu erhöhen, ist nach einer Weiterbildung der Erfindung vorgesehen, dass die Transportvorrichtung einen zwischen dem Doppelförderer und dem Korrekturförderer angeordneten Zwischenförderer umfasst. Der Zwischenförderer ist insbesondere als Einzelförderer ausgebildet, d. h. er weist eine einzelne Fördereinheit auf. Er ist in Transportrichtung der Vorrichtung insbesondere zwischen dem Doppelförderer und dem Korrekturförderer angeordnet und grenzt mit einem ersten Ende an den Doppelförderer und mit einem dem ersten Ende gegenüberliegenden zweiten Ende an den Korrekturförderer an.

Die Überwachungsvorrichtung kann an unterschiedlichen Positionen der Vorrichtung angeordnet sein. Besonders bevorzugt ist die Überwachungsvorrichtung zum Erfassen der Istausrichtung jedoch im Bereich des Doppelförderers, des Korrekturförderers und/oder des Einzelförderers angeordnet. Die Anordnung im Bereich des Doppelförderers ermöglicht eine besonders kompakte Vorrichtung, da gegebenenfalls auf einen Zwischenförderer und/oder einen Korrekturförderer verzichtet werden kann. Die Anordnung im Bereich des Korrekturförderers ohne Zwischenförderer ermöglicht dagegen eine höhere Durchsatzgeschwindigkeit der Gebinde durch die Vorrichtung, da der Doppelförderer ausschließlich mit einer Geschwindigkeitsdifferenz fährt und das Erfassen der Istausrichtung auf den Korrekturförderer beschränkt wird. Eine weitere Erhöhung der Durchsatzgeschwindigkeit wird insbesondere durch die Anordnung der Überwachungsvorrichtung im Bereich des Zwischenförderers erreicht, da die durch den Korrekturförderer erzeugte zweite Drehbewegung unverzüglich mit dem Überführen des Gebindes auf den Korrekturförderer durchgeführt werden kann und keine Erfassung des Gebindes erfolgen muss. Anzumerken ist, dass vorzugsweise die Anordnung des Doppelförderers alleine, des Doppelförderers mit einem Korrekturförderer oder die Anordnung des Doppelförderers mit Zwischenförderer und Korrekturförderer erfolgt, wobei vorzugsweise zudem jeweils eine Überwachungsvorrichtung, nämlich entweder am Doppelförderer, am Korrekturförderer oder am Zuführförderer angeordnet ist.

Zur Genauigkeitsverbesserung der ersten Drehbewegung auf dem Doppelförderer kann eine automatische Ausrichtkorrektur durchgeführt werden. Bei dieser werden die ermittelten Abweichungen der Gebinde auf systematische Abweichungen analysiert. Sofern entsprechend einer vorgegebenen Definition eine systematische Abweichung vorliegt, wird automatisch und ohne den Eingriff von Bedienungspersonal die Geschwindigkeitsdifferenz der Fördereinheiten des Doppelförderers angepasst, sodass die Anzahl der systematischen Abweichung und/oder die Größe der systematischen Abweichung verringert oder vollständig ausgeglichen wird.

Für die Analyse auf eine systematische Abweichung ist besonders bevorzugt eine Korrekturvorrichtung angeordnet, der die erfassten Daten der Überwachungsvorrichtung und/oder der Auswerteinheit zur Verfügung stehen. Ferner steht die Korrekturvorrichtung insbesondere mit der Steuereinheit in Verbindung, die zur Ansteuerung des Doppelförderers ausgebildet ist.

Insbesondere für die Analyse auf eine systematische Abweichung ist nach einer Weiterbildung der Erfindung ein Überwachungssystem zum Erfassen der Istausrichtung eines der Gebinde angeordnet, das insbesondere zum Erfassen einer Istausrichtung auf dem Doppelförderer ausgebildet ist. Dabei ist das Überwachungssystem insbesondere derart positioniert, dass die Gebinde vorzugsweise im Einlaufbereich des Doppelförderers erfasst werden. Das Überwachungssystem kann grundsätzlich der Überwachungsvorrichtung entsprechen. So kann auch das Überwachungssystem beispielsweise als optisches System, insbesondere als kamerabasiertes System ausgebildet sein. Üblicherweise benötigt das Überwachungssystem jedoch keine Vorrichtungen zum Vergleich, zur Ermittlung oder zur Ansteuerung, sondern es stellt die von ihr ermittelten Messdaten (bspw. Bilder) der Auswerteinrichtung und/oder der vorgesehenen Korrekturvorrichtung zum Auffinden einer systematischen Abweichung zur Verfügung.

Die Korrekturvorrichtung kann beispielsweise einteilig mit dem Überwachungssystem der Überwachungsvorrichtung, der Auswerteinheit und/oder der Steuereinheit ausgebildet sein.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates), wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Im Weiteren wird die Erfindung anhand von Ausführungsbeispielen näher beschrieben. Es zeigt:
- Fig. 1: schematisch in einer perspektivischen Darstellung eine Ausführungsform der erfinderischen Vorrichtung,
- Fig. 2: schematisch in einer Draufsicht eine Ausführungsform der erfinderischen Vorrichtung beim Transport und Drehen mehrerer Gebinde.

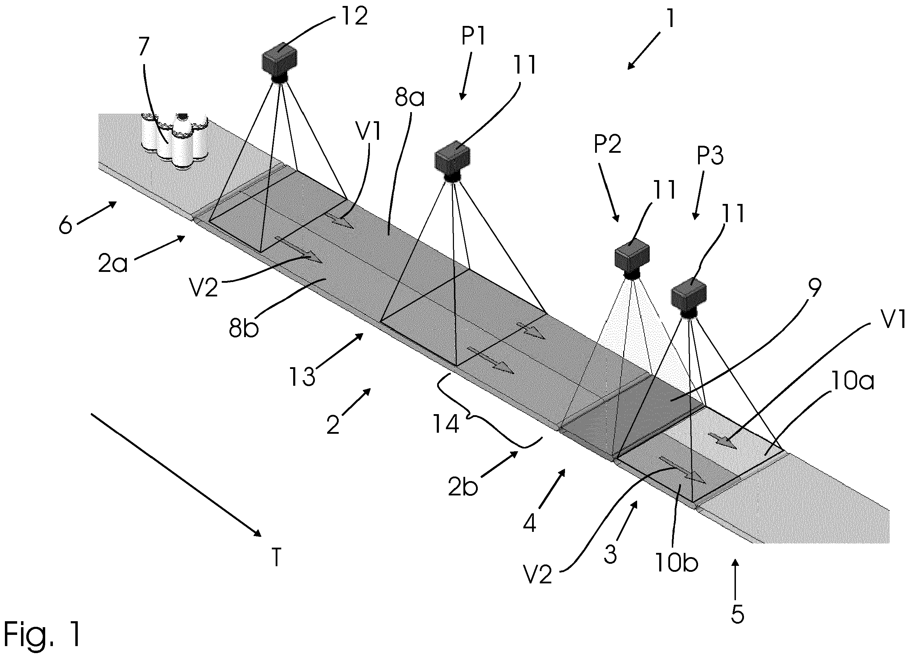

Figur 1 zeigt einen Ausschnitt einer Transportvorrichtung 1 die Teil einer Behälterbehandlungsanlage (nicht dargestellt) ist. Die Transportvorrichtung 1 umfasst einen Doppelförderer 2, einen Korrekturförderer 3 und einen zwischen dem Doppelförderer 2 und dem Korrekturförderer 3 angeordneten Zwischenförderer 4. Weiter sind ein Abführförderer 5 und ein Zuführförderer 6 dargestellt. Auf dem Zuführförderer 6 ist ferner ein Gebinde 7 zu sehen, dass durch den Zuführförderer 6 auf den Doppelförderer 2 transportiert werden soll. Das Gebinde 7 besteht aus sechs Behältern, hier sechs Flaschen, die beispielsweise für Getränke ausgebildet sein können und die miteinander zu einem Gebinde 7 verbunden sind. Das Gebinde 7 weist einen rechtwinkligen Querschnitt auf.

Der Doppelförderer 2 besteht aus zwei Fördereinheiten 8a, 8b die nebeneinander angeordnet sind und sowohl mit derselben Geschwindigkeit als auch mit unterschiedlichen Geschwindigkeiten gefahren werden können. Bei dem hier dargestellten Doppelförderer 2 wird die in Transportrichtung T (durch einen Pfeil dargestellt) links angeordnete, erste Fördereinheit 8a mit einer geringeren Geschwindigkeit (durch einen kurzen Pfeil dargestellt) gegenüber der in Transportrichtung T rechts angeordneten, zweiten Fördereinheiten 8b gefahren. D. h., die zweite Fördereinheit 8b weist eine höhere Geschwindigkeit (durch einen langen Pfeil dargestellt) auf.

Der Zwischenförderer 4 ist als Einzelförderer ausgebildet, d. h., er besteht aus einer einzelnen Fördereinheit 9. Der Korrekturförderer 3 wiederum ist entsprechend dem Doppelförderer 2 aufgebaut und besteht ebenfalls aus zwei Fördereinheiten 10a, 10b die strukturell entsprechend dem Doppelförderer 2 aufgebaut sind und auch dementsprechend betrieben werden können. Der Korrekturförderer 3 ist deutlich kürzer gegenüber dem Doppelförderer 2 ausgebildet. Während der Korrekturförderer 3 wie auch der Zwischenförderer 4 insbesondere nur dazu ausgebildet sind, jeweils ein einzelnes Gebinde 7 zu transportieren, ist der Doppelförderer 2 jeweils dazu ausgebildet, eine Vielzahl von Gebinden gleichzeitig zu transportieren und zu drehen.

Alle Förderer/Fördereinheiten sind hier als Bandförderer ausgebildet. Alternativ können jedoch auch einzelne oder alle der Förderer/Fördereinheiten als Kettenförderer o.ä. ausgebildet sein.

Weiter ist in Figur 1 eine Überwachungsvorrichtung dargestellt, die in drei verschiedenen Positionen P 1, P 2, P 3 gezeigt ist. Außerdem wird ein Überwachungssystem 12 in einer Position am Anfang 2a des Doppelförderers 2 (Gebindeeinlauf) gezeigt.

Die Überwachungsvorrichtung 11 kann insbesondere in einer der drei Positionen P 1, P 2 oder P 3 angeordnet sein.

In der ersten Position P 1 ist die Überwachungsvorrichtung 11 dazu ausgebildet, ein Gebinde 7, das auf dem Doppelförderer 2 transportiert wird, zu erfassen. Dabei kann die erste Position P1 insbesondere im Bereich zwischen der Mitte 13 des Doppelförderers 2 und dem Ende des Doppelförderers 2a vorgesehen sein. In der zweiten Position P 2 ist die Überwachungsvorrichtung 11 dazu ausgebildet, das Gebinde 7 auf dem Zwischenförderer 4 zu erfassen, während in der dritten Position P 3 die Überwachungsvorrichtung 11 dazu ausgebildet ist, das Gebinde 7 auf dem Korrekturförderer 3 zu erfassen.

Der Einfachheit halber wurden in Figur 1 in jeder Position P 1, P 2 und P 3 jeweils eine Überwachungsvorrichtung 11 dargestellt. Üblicherweise und insbesondere abhängig von der Ausgestaltung der Vorrichtung ist die erste Überwachungsvorrichtung 11 jedoch nur in einer der drei Positionen P 1, P 2 oder P 3 angeordnet und nicht wie hier dargestellt in jeder der Positionen P 1, P 2, P 3.

Das Überwachungssystem 12 ist optional und dient insbesondere einer weiteren Verbesserung der Positioniergenauigkeit des Gebindes 7. Mit dem Überwachungssystem 12 ist es möglich, insbesondere die Ausgangsposition des Gebindes 7 am Anfang 2a des Doppelförderers 2 zu bestimmen. Über den bekannten Abstand zur ersten Überwachungsvorrichtung 11 kann die durch den Doppelförderer 2 erzeugte erste Drehbewegung des Gebindes 7 zwischen dem Erfassen durch das Überwachungssystem 12 und dem Erfassen durch die Überwachungsvorrichtung 11 als absoluter Wert ermittelt werden.

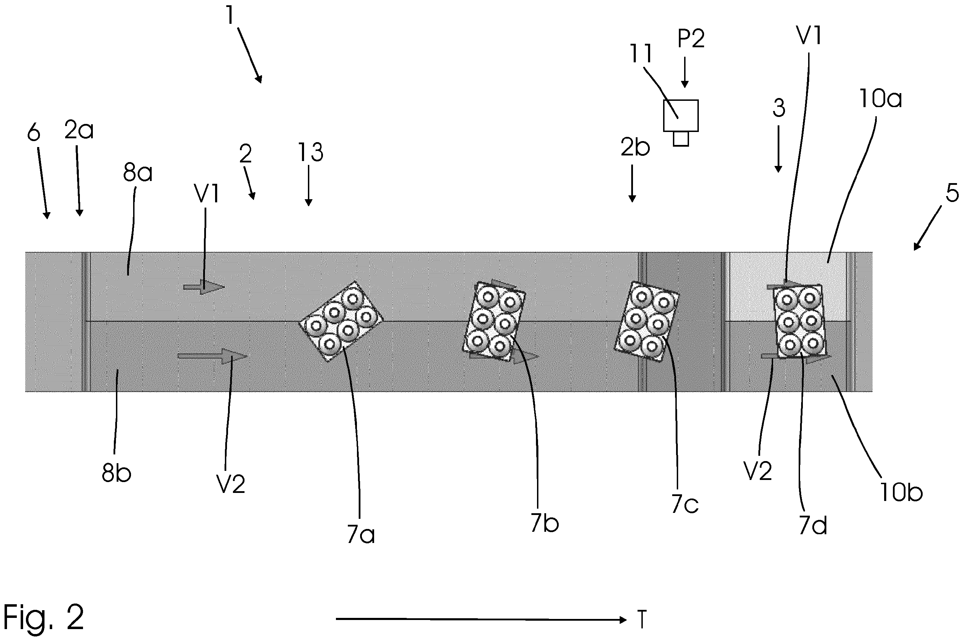

Figur 2 zeigt einen Ausschnitt einer Vorrichtung zum Drehen mit einer Transportvorrichtung 1, die wie die Transportvorrichtung 1 aus Figur 1 einen Zuführförderer 6, einen Doppelförderer 2, einen Zwischenförderer 4 und einen Korrekturförderer 3 mit einem anschließenden Abführförderer 5 umfasst.

In der Transportvorrichtung 1 werden Gebinde 7a-7d, in diesem Fall vier, gleichzeitig transportiert. Dabei sind auf dem Doppelförderer 2 zwei Gebinde 7 dargestellt, die in Transportrichtung T transportiert und gleichzeitig gedreht werden. Die Drehbewegung wird durch eine höhere Fördergeschwindigkeit V2 der zweiten Fördereinheit 8b gegenüber der Fördergeschwindigkeit V1 der ersten Fördereinheit 8a des Doppelförderers 2 erzeugt. Die Drehbewegung erfolgt um eine vertikale Längsachse (hier nicht dargestellt) als Linksdrehung (gegen den Uhrzeigersinn). Ein weiteres drittes Gebinde 7c wird gerade von dem Doppelförderer 2 auf den Zwischenförderer 4 bewegt.

Auf dem Korrekturförderer 3 ist ein weiteres, viertes Gebinde 7d dargestellt, welches in seiner Ausrichtung durch den Korrekturförderer 3 nochmals angepasst wird. Die Ausrichtung des Gebindes 7d auf dem Korrekturförderer 3 erfolgt entsprechend der Drehbewegung des Doppelförderers 2 durch unterschiedliche Geschwindigkeiten V1, V2 der beiden Fördereinheiten 10a, 10b des Korrekturförderers 3.

Während der Doppelförderer 2 eine erste Drehbewegung um eine vertikal ausgerichtete Längsachse (hier nicht dargestellt) des Gebindes 7 erzeugt, bewirkt der Korrekturförderer 3 eine zweite Drehbewegung des jeweils auf ihm stehenden Gebindes 7a-7d, ebenfalls um die vertikal ausgerichtete Längsachse. Um die Größe und Richtung der zweiten Drehbewegung festlegen zu können, ist die Überwachungsvorrichtung 11 in einer Position P 2 an dem Zwischenförderer 4 angeordnet. Die Überwachungsvorrichtung 11 erfasst die Istausrichtung des auf dem Zwischenförderer 4 befindlichen Gebindes 7, hier insbesondere einen Drehwinkel. Die von der Überwachungsvorrichtung 11 erfasste Ausrichtung wird über eine Auswerteinheit (hier nicht dargestellt) ausgewertet und mit einer Sollausrichtung, die das Gebinde 7 auf dem Zwischenförderer 4 aufweisen soll, verglichen. Dabei wird eine gegebenenfalls vorliegende Abweichung ermittelt. Auf Grundlage der ermittelten Abweichung wird über eine Steuereinheit (hier nicht dargestellt) der Korrekturförderer 3 angesteuert. Mittels der Ansteuerung werden die Geschwindigkeiten V1, V2 der ersten und zweiten Fördereinheiten 10a, 10b des Korrekturförderers 3 derart angepasst, dass das auf dem Korrekturförderer 3 befindliche Gebinde 7 die zweite Drehbewegung durchführt, die das Gebinde 7 in die vorgegebene Sollausrichtung bewegt.

In einer alternativen Ausführungsform der Erfindung befindet sich die Überwachungsvorrichtung 11 in einer Position P 3, in der sie ein, auf dem Korrekturförderer 3 aufstehendes Gebinde 7 erfasst. Bei dieser Ausführungsform erfasst die Überwachungseinheit 11 das jeweilige Gebinde 7a-7d insbesondere direkt, nachdem das Gebinde 7a-7d auf den Korrekturförderer 3 bewegt wird und auf diesem aufsteht. Ein Zwischenförderer 4 muss nicht angeordnet sein. Das von der Überwachungsvorrichtung 11 erfasste Bild wird entsprechend der vorbeschriebenen Ausführungsform mittels einer Auswerteeinheit ausgewertet, d. h., das erfasste Bild wird ausgewertet, die Istausrichtung bestimmt und mit einer Sollausrichtung, die das Gebinde 7 auf dem Korrekturförderer aufweisen soll, verglichen und eine Abweichung ermittelt. Mittels der Steuereinheit (hier nicht dargestellt) wird der Korrekturförderer 3 angesteuert und die jeweiligen Geschwindigkeiten V1, V2 der Fördereinheiten 10a, 10b, des Korrekturförderers 3 derart angepasst, dass beim Transport des jeweiligen Gebildes 7a-7d auf dem Korrekturförderer 3 dieser die zweite Drehbewegung erfährt, die ihn in die vorgegebene Sollposition ausrichtet.

In einer weiteren alternativen Ausführungsform der Erfindung ist die Überwachungsvorrichtung 11 in einer Position P 1 angeordnet, in der sie jeweils eines der gleichzeitig auf dem Doppelförderer 3 angeordneten und von dem Doppelförderer 3 transportierten Gebinde 7a-7d erfasst. Dabei erfasst Sie insbesondere jeweils das Gebinde 7a-7d, welches als Nächstes von dem Doppelförderer 3 auf ein sich anschließendes Bauteil der Vorrichtung, bspw. einen weiteren Förderer, übergeben wird.

Nach dem Erfassen eines der Gebinde 7a-7d wird auch hier über eine angeschlossene Auswerteeinheit (hier nicht dargestellt) eine Abweichung einer Istausrichtung von einer Sollausrichtung ermittelt. Die Steuereinheit steuert auf Basis der ermittelten Abweichung den Doppelförderer 3 derart an, sodass er die Geschwindigkeiten V1, V2 der Fördereinheiten 8a, 8b des Doppelförderers 2 so anpasst, dass das jeweils erfasste Gebinde 7a-7d auf dem restlichen Transportweg 14 des Gebindes 7a-7d auf dem Doppelförderer 2 bis zur Übergabe auf bspw. das sich anschließende Bauteil, bspw. einen weiteren Förderer, eine zweite Drehbewegung durchführt, die das Gebinde in die vorgegebene Sollausrichtung führt. Dabei führen selbstverständlich sämtliche auf dem Doppelförderer zu dieser Zeit transportierten Gebinde die gleiche zweite Drehbewegung aus.

Die Position P 1 und das Erfassen eines der Gebinde 7a-7d auf dem Doppelförderer 2 sind dabei derart aufeinander abgestimmt, dass das dem erfassten Gebinde 7a-7d nachfolgende Gebinde 7a-7d erst erfasst und die Geschwindigkeiten V1, V2 der Fördereinheiten 8a, 8b angepasst werden, sobald das zuerst erfasste Gebinde 7a-7d seine zweite Bewegung abgeschlossen und/oder den Doppelförderer 2 verlassen hat, damit dieser keine ihn aus seiner Sollausrichtung führende weitere Bewegung durchführt.

Selbstverständlich sind auch bei dieser Ausführungsform ein Korrekturförderer 3 und ggf. ein Zwischenförderer 4 bspw. mit einer zusätzlichen Überwachungsvorrichtung anordbar, wodurch eine nochmalige Kontrolle der Istausrichtung durchgeführt werden kann, bzw. auch eine die Positioniergenauigkeit der Gebinde 7 weiter erhöhende, zusätzliche Bewegung des Gebindes 7 durchgeführt werden kann.

Unabhängig von der Positionierung der Überwachungsvorrichtung 11 in einer der Positionen P 1, P 2 und/oder P 3 und unabhängig davon, ob die Vorrichtung mit Korrekturförderer 3 und/oder Zwischenförderer 4 angeordnet ist, kann eine automatische Anpassung der Geschwindigkeiten V1, V2 der Führungseinheiten 8a, 8b des Doppelförderers 2 vorgesehen sein.

Bei der automatischen Anpassung werden die erfassten Istausrichtungen einer Mehrzahl von Gebinden 7, 7a-7d auf systematisch auftretende Abweichungen analysiert. Was eine systematische Abweichung ist, wird vorher definiert und im System, bspw. einer Korrektureinheit (hier nicht dargestellt) hinterlegt. Sobald eine sich wiederholende Abweichung oder Abweichungstendenz auftritt, spricht eine Steuereinrichtung (hier nicht dargestellt) an und die Geschwindigkeiten V1, V2 der Führungseinheiten 8a, 8b des Doppelbandförderers 2 werden derart angepasst, dass mit der ersten Bewegung der Gebinde 7, 7a-7d die systematische auftretende Abweichung zumindest weitestgehend ausgeglichen wird.

### Bezugszeichenliste

- 1: Transportvorrichtung
- 2: Doppelförderer
- 2a: Anfang Doppelförderer
- 2b: Ende Doppelförderer
- 3: Korrekturförderer
- 4: Zwischenförderer
- 5: Abführförderer
- 6: Zuführförderer
- 7: Gebinde
- 7a-7d: erstes bis viertes Gebinde
- 8a, 8b: Fördereinheiten
- 9: Fördereinheit
- 10a, 10b: Fördereinheiten
- 11: Überwachungsvorrichtung
- 12: Überwachungssystem
- 13: Mitte Doppelförderer
- 14: restlicher Transportweg

- T: Transportrichtung
- P1: erste Position Überwachungsvorrichtung
- P2: zweite Position Überwachungsvorrichtung
- P3: dritte Position Überwachungsvorrichtung
- V1: Fördergeschwindigkeit kleiner V2
- V2: Fördergeschwindigkeit größer V1

## Patentansprüche

1. Verfahren zum Drehen von Gebinden in einer Behälterbehandlungsanlage mit den Schritten:
• Transport mindestens eines Gebindes oder gleichzeitiger Transport mehrerer Gebinde auf einer Transportvorrichtung (1),
• Durchführen einer ersten Drehbewegung des mindestens einen Gebindes oder der Gebinde (7, 7a-7d) mittels eines Doppelförderers (2) der Transportvorrichtung (1),
• Erfassen einer Istausrichtung eines ersten Gebindes (7, 7a-7d) mittels einer Überwachungsvorrichtung,
• Vergleich der Istausrichtung des ersten Gebindes (7, 7a-7d) mit einer vorgegebenen Sollausrichtung und
• Ermittlung einer Abweichung der Istausrichtung von der Sollausrichtung,
• Ansteuerung der Transportvorrichtung (1) und Durchführen einer die Abweichung ausgleichenden zweiten Drehbewegung des ersten Gebindes (7, 7a-7d).

2. Verfahren nach Anspruch 1, **dadurch gekennzeichnet, dass** die zweite Drehbewegung zum Ausgleich der Abweichung der Istausrichtung von der Sollausrichtung mittels des Doppelförderers (2) erzeugt wird.

3. Verfahren nach Anspruch 1, **dadurch gekennzeichnet, dass** die zweite Drehbewegung zum Ausgleich der Abweichung der Istausrichtung von der Sollausrichtung mittels eines Korrekturförderers (3) erzeugt wird.

4. Verfahren nach einem der vorhergehenden Ansprüche, **dadurch gekennzeichnet, dass** das Erfassen der Istausrichtung während des Transportes auf dem Doppelförderer (2), auf dem Korrekturförderer (3) und/oder auf einem zwischen dem Doppelförderer (2) und dem Korrekturförderer (3) angeordnetem Zwischenförderer (4) erfolgt.

5. Verfahren nach einem der vorhergehenden Ansprüche, **dadurch gekennzeichnet, dass** eine automatische Ausrichtungskorrektur durchgeführt wird, bei der die Abweichungen der Istausrichtung von der Sollausrichtung der einzelnen Gebinde (7, 7a-7d) über einen vorgegebenen Zeitraum erfasst und analysiert werden und bei der, bei Auftreten einer systematischen Abweichung, die erste Drehbewegung der Gebinde (7, 7a-7d) automatisch angepasst wird.

6. Verfahren nach einem der vorhergehenden Ansprüche, **dadurch gekennzeichnet, dass** zur Ermittlung der systematischen Abweichung eine Istausrichtung der Gebinde (7, 7a-7d) mindestens mittels eines Überwachungssystems erfasst und bei der Analyse zum systematischen Fehler berücksichtigt wird.

7. Vorrichtung zum Drehen von Gebinden (7, 7a-7d) in einer
Behälterbehandlungsanlage, mit
• einer Transportvorrichtung (1), die einen Doppelförderer (2) umfasst, der zum gleichzeitigen Transport und zum Durchführen einer ersten Drehbewegung eines oder mehrerer Gebinde (7, 7a-7d) ausgebildet ist,
• einer Überwachungsvorrichtung (11) zur Erfassung einer Istausrichtung von mindestens einem der Gebinde (7, 7a-7d),
• einer Auswerteinheit, die dazu ausgebildet ist, die Istausrichtung des erfassten Gebindes (7, 7a-7d) mit einer Sollausrichtung zu vergleichen und eine Abweichung zu ermitteln,
• einer Steuereinheit, die dazu ausgebildet ist, die Transportvorrichtung (1) anzusteuern und eine die Abweichung von der Sollausrichtung ausgleichende zweite Drehbewegung des Gebindes (7, 7a-7d) zu veranlassen.

8. Vorrichtung nach Anspruch 7, **dadurch gekennzeichnet, dass** die Transportvorrichtung (1) einen Korrekturförderer (3) umfasst, der zum Durchführen der zweiten Drehbewegung des Gebindes (7, 7a-7d) ausgebildet ist.

9. Vorrichtung nach mindestens einem der Ansprüche 7 oder 8, **dadurch gekennzeichnet, dass** die Transportvorrichtung (1) einen zwischen dem Doppelförderer (2) und dem Korrekturförderer (3) angeordneten Zwischenförderer (3) umfasst.

10. Vorrichtung nach mindestens einem der Ansprüche 7 bis 9, **dadurch**
**gekennzeichnet, dass** die Überwachungsvorrichtung (11) zum Erfassen der Istausrichtung im Bereich des Doppelförderers (2), des Korrekturförderers (3) und/oder Zwischenförderers (4) angeordnet ist

11. Vorrichtung nach mindestens einem der Ansprüche 7 bis 10, **dadurch gekennzeichnet, dass** ein Überwachungssystem (12) zum Erfassen der Istausrichtung eines der Gebinde (7, 7a-7d) angeordnet ist.

12. Vorrichtung nach mindestens einem der Ansprüche 7 bis 11, **dadurch gekennzeichnet, dass** eine Korrekturvorrichtung angeordnet ist, die zum Durchführen einer automatischen Ausrichtungskorrektur ausgebildet ist.

## Claims

1. Method for rotating packages in a container handling system, with the steps:
• transport of at least one package or simultaneous transport of a plurality of packages on a transport device (1),
• performance of a first rotational movement of at least one package or of the packages (7, 7a-7d) by means of a double conveyor (2) or transport device (1),
• detection of an actual orientation of a first package (7, 7a-7d) by means of a monitoring device,
• comparison of the actual orientation of the first package (7, 7a-7d) with a predetermined setpoint orientation, and
• determination of any deviation of the actual orientation from the setpoint orientation,
• actuation of the transport device (1) and performance of a second rotational movement of the first package (7, 7a-7d).

2. Method according to claim 1, **characterised in that** the second rotational movement for comparing the deviation of the actual orientation from the setpoint orientation is produced by means of the double conveyor (2).

3. Method according to claim 1, **characterised in that** the second rotational movement for comparing the deviation of the actual orientation from the setpoint orientation is produced by means of a correction conveyor (3).

4. Method according to any one of the preceding claims, **characterised in that** the detection of the actual orientation takes place during the transport on the double conveyor (2), on the correction conveyor (3), and/or on a second intermediate conveyor (4) arranged between the double conveyor (2) and the correction conveyor (3).

5. Method according to any one of the preceding claims, **characterised in that** an automatic orientation correction is carried out, wherein the deviations of the actual orientation from the setpoint orientation of the individual packages (7, 7a-7d) is detected and analysed over a predetermined period of time, and wherein, in the event of a systematic deviation occurring, the first rotational movement of the packages (7, 7a-7d) is automatically adjusted.

6. Method according to any one of the preceding claims, **characterised in that**, for the detection of the systematic deviation, an actual orientation of the packages (7, 7a-7d) is detected at least by means of a monitoring system, and is taken into account in the analysis of the systematic error.

7. Device for rotating packages (7, 7a-7d) in a container treatment system, with
• a transport device (1), which comprises a double conveyor (2), which is configured for the simultaneous transport and performing of a first rotational movement of one or more packages (7, 7a-7d),
• a monitoring device (11) for detecting an actual orientation of at least one of the packages (7, 7a-7d),
• an evaluation unit, which is configured such as to compare the actual orientation of the detected package (7, 7a-7d) with a setpoint orientation, and to determine any deviation,
• a control unit, which is configured such as to actuate the transport device (1) and to arrange for a second rotational movement of the package (7, 7a-7d) which will compensate for the deviation from the setpoint orientation.

8. Device according to claim 7, **characterised in that** the transport device (1) comprises a correction conveyor (3), which is configured such as to perform the second rotational movement of the package (7, 7a-7d).

9. Device according to at least one of claims 7 or 8, **characterised in that** the transport device (1) comprises an intermediate conveyor (3) arranged between the double conveyor (2) and the correction conveyor (3).

10. Device according to at least one of claims 7 to 9, **characterised in that** the monitoring device (11) for detecting the actual orientation is arranged in the region of the double conveyor (2), of the correction conveyor (3), and/or of the intermediate conveyor (4).

11. Device according to at least one of claims 7 to 10, **characterised in that** a monitoring system (12) is arranged such as to detect the actual orientation of one of the packages (7, 7a-7d).

12. Device according to at least one of claims 7 to 11, **characterised in that** a correction device is arranged which is configured such as to carry out an automatic orientation correction.

## Revendications

1. Procédé pour amener en rotation des lots de produits dans une installation de traitement de contenants avec les étapes de :
• transport d'au moins un lot de produits ou transport simultané de plusieurs lots de produits sur un dispositif de transport (1),
• mise en oeuvre d'un premier mouvement rotatif de l'au moins un lot de produits ou des lots de produits (7, 7a-7d) au moyen d'un double convoyeur (2) du dispositif de transport (1),
• détection d'une orientation réelle d'un premier lot de produits (7, 7a-7d) au moyen d'un dispositif de surveillance,
• comparaison de l'orientation réelle du premier lot de produits (7, 7a-7d) à une orientation théorique prédéfinie et
• détermination d'un écart de l'orientation réelle par rapport à l'orientation théorique,
• commande du dispositif de transport (1) et mise en oeuvre d'un deuxième mouvement rotatif du premier lot de produits (7, 7a-7d) compensant l'écart.

2. Procédé selon la revendication 1, **caractérisé en ce que** le deuxième mouvement rotatif est produit pour compenser l'écart de l'orientation réelle par rapport à l'orientation théorique au moyen du double convoyeur (2).

3. Procédé selon la revendication 1, **caractérisé en ce que** le deuxième mouvement rotatif est produit pour compenser l'écart de l'orientation réelle par rapport à l'orientation théorique au moyen d'un convoyeur de correction (3).

4. Procédé selon l'une quelconque des revendications précédentes, **caractérisé en ce que** la détection de l'orientation réelle s'effectue pendant le transport sur le double convoyeur (2), sur le convoyeur de correction (3) et/ou sur un convoyeur intermédiaire (4) disposé entre le double convoyeur (2) et le convoyeur de correction (3).

5. Procédé selon l'une quelconque des revendications précédentes, **caractérisé en ce qu'**une correction d'orientation automatique est mise en oeuvre, lors de laquelle les écarts de l'orientation réelle par rapport à l'orientation théorique des lots de produits (7, 7a-7d) individuels sont détectés et analysés pendant un laps de temps prédéfini et lors de laquelle, à l'apparition d'un écart systématique, le premier mouvement rotatif des lots de produits (7, 7a-7d) est adapté automatiquement.

6. Procédé selon l'une quelconque des revendications précédentes, **caractérisé en ce que** pour la détermination de l'écart systématique une orientation réelle des lots de produits (7, 7a-7d) est détectée au moins au moyen d'un système de surveillance et prise en compte pour l'analyse d'erreurs systématiques.

7. Dispositif pour amener en rotation des lots de produits (7, 7a-7d) dans une installation de traitement de contenants, avec
• un dispositif de transport (1), qui comprend un double convoyeur (2), qui est réalisé pour le transport simultané et pour la mise en oeuvre d'un premier mouvement rotatif d'un ou plusieurs lots de produits (7, 7a-7d),
• un dispositif de surveillance (11) pour la détection d'une orientation réelle d'au moins un des lots de produits (7, 7a-7d),
• une unité d'évaluation, qui est réalisée pour comparer l'orientation réelle du lot de produits (7, 7a-7d) détecté à une orientation théorique et pour déterminer un écart,
• une unité de commande, qui est réalisée pour commander le dispositif de transport (1) et pour déclencher un deuxième mouvement rotatif du lot de produits (7, 7a-7d) compensant l'écart par rapport à l'orientation théorique.

8. Dispositif selon la revendication 7, **caractérisé en ce que** le dispositif de transport (1) comprend un convoyeur de correction (3), qui est réalisé pour la mise en oeuvre du deuxième mouvement rotatif du lot de produits (7, 7a-7d).

9. Dispositif selon au moins l'une des revendications 7 ou 8, **caractérisé en ce que** le dispositif de transport (1) comprend un convoyeur intermédiaire (3) disposé entre le double convoyeur (2) et le convoyeur de correction (3).

10. Dispositif selon au moins l'une des revendications 7 à 9, **caractérisé en ce que** le dispositif de surveillance (11) pour la détection de l'orientation réelle est disposé dans la zone du double convoyeur (2), du convoyeur de correction (3) et/ou convoyeur intermédiaire (4).

11. Dispositif selon au moins l'une des revendications 7 à 10, **caractérisé en ce qu'**un système de surveillance (12) est disposé pour la détection de l'orientation réelle d'un des lots de produits (7, 7a-7d).

12. Dispositif selon au moins l'une des revendications 7 à 11, **caractérisé en ce qu'**un dispositif de correction est disposé, qui est réalisé pour la mise en oeuvre d'une correction d'orientation automatique.
